# EUROPÄISCHE PATENTANMELDUNG

(11) **EP 3 718 825 A1**
(43) Veröffentlichungstag der Anmeldung: **07.10.2020**
(21) Anmeldenummer: 19167535.4
(22) Anmeldetag: 05.04.2019
(51) Int. Cl.: B60Q 1/00, F21S 41/663

(54) **KRAFTFAHRZEUGSCHEINWERFER**

(71) Anmelder: ZKW Group GmbH, 3250 Wieselburg (AT)
(72) Erfinder: Koller, Jan, 1120 Wien (AT); Mitterlehner, Thomas, 3240 Mank (AT); Schantl, Patrik, 2604 Theresienfeld (AT)
(74) Vertreter: Patentanwaltskanzlei Matschnig & Forsthuber OG

(57) **Zusammenfassung**

Die Erfindung betrifft einen Kraftfahrzeugscheinwerfer (1), umfassend eine elektronische Schaltung (6), welche eine Logikschaltung (200) und zumindest zwei Leuchtkanäle (210-212) aufweist, wobei jedem Leuchtkanal (210-212) je eine Lichtquelle (50-52) zugeordnet ist,
und der Kraftfahrzeugscheinwerfer (1) ferner eine Ablenkvorrichtung (2), eine Ansteuerschaltung zur Ansteuerung der Ablenkvorrichtung (2) und eine Projektionsoptik (3) mit einer Brennebene aufweist,
und jede Lichtquelle (50-52) jedes Leuchtkanals (210-212) von der Logikschaltung (200) zur Modulation der Leistung der Lichtquelle (50-52) ansteuerbar ist und dazu eingerichtet ist, ein Lichtbündel in Richtung der Ablenkvorrichtung (2) zu emittieren,
und die Ablenkvorrichtung (2) dazu eingerichtet ist, das emittierte Lichtbündel umzulenken
und in einer Zwischenbildebene eine Helligkeitsverteilung auszubilden, wobei die Zwischenbildebene in der Brennebene der Projektionsoptik (3) liegt, und die Projektionsoptik (3) die Helligkeitsverteilung der Zwischenbildebene als Lichtbild in Abstrahlrichtung (5) des Kraftfahrzeugscheinwerfers (1) projiziert.

## Beschreibung

Die Erfindung betrifft einen Kraftfahrzeugscheinwerfer, umfassend eine elektronische Schaltung, welche eine Logikschaltung und zumindest zwei Leuchtkanäle aufweist, wobei jedem Leuchtkanal je eine Lichtquelle zugeordnet ist, und der Kraftfahrzeugscheinwerfer ferner eine Ablenkvorrichtung, eine Ansteuerschaltung zur Ansteuerung der Ablenkvorrichtung und eine Projektionsoptik mit einer Brennebene aufweist, und jede Lichtquelle jedes Leuchtkanals von der Logikschaltung zur Modulation der Leistung der Lichtquelle ansteuerbar ist und dazu eingerichtet ist, ein Lichtbündel in Richtung der Ablenkvorrichtung zu emittieren, und die Ablenkvorrichtung dazu eingerichtet ist, das emittierte Lichtbündel umzulenken und in einer Zwischenbildebene eine Helligkeitsverteilung auszubilden, wobei die Zwischenbildebene in der Brennebene der Projektionsoptik liegt, und die Projektionsoptik die Helligkeitsverteilung der Zwischenbildebene als Lichtbild in Abstrahlrichtung des Kraftfahrzeugscheinwerfer projiziert.

Bei der Entwicklung der gegenwärtigen Scheinwerfersysteme steht regelmäßig der Wunsch im Vordergrund, ein möglichst hochauflösendes Lichtbild auf die Fahrbahn projizieren zu können, das rasch geändert und den jeweiligen Verkehrs-, Straßen- und Lichtbedingungen angepasst werden kann. Der Begriff "Fahrbahn" wird hier zur vereinfachten Darstellung verwendet, denn selbstverständlich hängt es von den örtlichen Gegebenheiten ab, ob sich ein Lichtbild tatsächlich auf der Fahrbahn befindet oder auch darüber hinaus erstreckt. Prinzipiell entspricht das Lichtbild im hier verwendeten Sinn einer Projektion auf eine vertikale Fläche entsprechend der einschlägigen Normen, die sich auf die KFZ-Beleuchtungstechnik beziehen. Oft spricht man an Stelle von "Fahrbahn" auch von "Verkehrsraum".

Es sind unterschiedliche Scheinwerfersysteme entwickelt worden, wie insbesondere mit sehr schnell abgelenkten, modulierten Laserstrahlen arbeitende Scheinwerfer, wobei lichttechnischer Ausgangspunkt zumindest eine Laserlichtquelle ist, die einen Laserstrahl abgibt, und welcher eine Laseransteuerung zugeordnet ist, die zur Stromversorgung sowie zur Überwachung der Laseremission oder z.B. zur Temperaturkontrolle dient und auch zum Modulieren der Intensität des abgestrahlten Laserstrahls eingerichtet ist. Unter "Modulieren" ist dabei zu verstehen, dass die Intensität der Laserlichtquelle geändert werden kann, sei es kontinuierlich oder im Sinne eines Ein- und Ausschaltens gepulst. Wesentlich ist, dass die Lichtleistung analog dynamisch geändert werden kann, je nachdem, an welcher Winkelposition ein den Laserstrahl ablenkender Spiegel steht. Zusätzlich gibt es noch die Möglichkeit des Ein- und Ausschaltens für eine gewisse Zeit, um definierte Stellen nicht zu beleuchten oder auszublenden. Die Ansteuerung der Laserlichtquellen und der zur Strahlablenkung dienenden Mikrospiegel erfolgt über eine Recheneinheit. Ein Beispiel eines dynamischen Ansteuerungskonzepts zur Erzeugung eines Bildes durch einen sehr schnell abgelenkten Laserstrahl ist etwa in dem Dokument AT 514633 der Anmelderin beschrieben.

Eine Ausführungsvariante eines derartigen Fahrzeugscheinwerfers kann mehrere Laserlichtquellen umfassen, welche eingerichtet sind, mehrere parallele Lichtzeilen zu erzeugen, welche ein gemeinsames Lichtbild mit einer Gesamthelligkeitsverteilung des Scheinwerfers formen. Die Vorrichtung zur Erzeugung einer einzelnen Lichtzeile wird als Leuchtkanal bezeichnet. Somit ist es ausreichend, wenn eine gemeinsame Ablenkeinheit alle parallelen Lichtstrahlen der Laserlichtquellen gemeinsam um eine Achse ablenkt, wodurch der Scheinwerfer kostengünstig und vor allem für hohe Laserleistungen, welche in einem Fahrzeugscheinwerfer eingesetzt werden, geeignet ist.

Außerdem kann der Einsatz in Scheinwerfern eine hohe Dynamik des Lichtbilds, das heißt ein sehr rasch änderbares Lichtbild erfordern, wodurch eine sehr schnell arbeitende Ansteuerungselektronik mit niedriger Latenz erforderlich sein kann.

Bei der Ansteuerung der Laserlichtquellen der einzelnen Leuchtkanäle durch eine Ansteuerelektronik, insbesondere bei der Konversion digitaler Steuersignale zu einem analogen Treibersignal für eine Laserlichtquelle, kann es durch eine ungünstige Führung von Steuerleitungen auf einem Schaltungsträger, beispielsweise einer Leiterplatte, zu unterschiedlichen Signallaufzeiten der Ansteuerungssignale der Laserlichtquellen kommen, welche unerwünschte optische Effekte in der erzeugten Gesamthelligkeitsverteilung hervorrufen können.

Die Führung der Steuerleitungen auf der Leiterplatte kann durch die große Anzahl an Komponenten, aber insbesondere auch durch vorbestimmte Positionen einzelner Komponenten, wie Lichtquellen, auf der Leiterplatte oder eine beschränkte Anzahl an Lagen innerhalb der Leiterplatte sehr komplex sein. Dabei kann durch eine zentral auf dem Schaltungsträger angeordnete Logikschaltung nicht immer erreicht werden, dass die Signallaufzeiten einzelner Pfade der Steuerleitungen in der erforderlichen Präzision aufeinander abgestimmt sind, insbesondere wenn mehrere Lichtquellen an unterschiedlich entfernten, aber vorgegebenen Positionen auf dem Schaltungsträger angeordnet sind.

Außerdem wird für die Umsetzung einer großen Anzahl von Signalleitungen auf einer Leiterplatte ein entsprechend großer Platz benötigt, wodurch die Leiterplatte einen großen Bauraum innerhalb eines Scheinwerfers erfordert und die Anordnung teuer ist.

Es ist Aufgabe der Erfindung, einen Kraftfahrzeugscheinwerfer mit einer verbesserten Steuerung der Lichtverteilung zu schaffen.

Die Aufgabe wird durch einen Kraftfahrzeugscheinwerfer der eingangs genannten Art gelöst, indem erfindungsgemäß jedem Leuchtkanal ein Kanal-Wandler und ein Digital-zu-Analog-Konverter zugeordnet sind, wobei
- der Kanal-Wandler einen Dateneingang, einen Takteingang und einen Steuereingang aufweist, und dazu eingerichtet ist, über den Takteingang ein Taktsignal zu empfangen, und über den Steuereingang ein Steuersignal zu empfangen, und mit Hilfe des Taktsignals über den Dateneingang modulationsrelevante Daten zu empfangen, wobei das Datensignal, das Steuersignal und das Taktsignal von der Logikschaltung erzeugt werden, und
- der Kanal-Wandler über einen Bus mit dem Digital-zu-Analog-Konverter verbunden ist und dazu eingerichtet ist, die modulationsrelevanten Daten mit Hilfe des Steuersignals über den Bus an den Digital-zu-Analog-Konverter zu senden, und
- der Digital-zu-Analog-Konverter über eine Treiberleitung mit der Lichtquelle verbunden ist und dazu eingerichtet ist, die modulationsrelevanten Daten von dem Bus zu empfangen, in ein analoges Treibersignal zu konvertieren und über die Treiberleitung auszugeben, und
- die Lichtquelle dazu eingerichtet ist, mittels dem von der Treiberleitung empfangenen analogen Treibersignal angesteuert zu werden und Licht in Form des Lichtbündels zu emittieren,
und die Logikschaltung dazu eingerichtet ist,
- das Taktsignal zu erzeugen und über die Taktleitung, welche mit dem Takteingang des Kanalwandlers verbunden ist, auszugeben, und
- das Steuersignal zu erzeugen und über die Steuerleitung, welche mit dem Steuereingang des Kanalwandlers verbunden ist, auszugeben, und
- zumindest einen Helligkeitsdatensatz zur Ansteuerung der Lichtquellen jedes Leuchtkanals in Form von jedem Leuchtkanal zugeordneten modulationsrelevanten Daten zu erzeugen, wobei die modulationsrelevanten Daten sämtlicher Kanal-Wandler über eine einzige serielle Datenverbindung an einen der Kanal-Wandler übertragen und ausgehend von diesem Kanal-Wandler auf die verbleibenden Kanal-Wandler aufgeteilt werden.

Durch die erfindungsgemäßen Merkmale wird ein Kraftfahrzeugscheinwerfer mit verbesserter Ansteuerung der Lichtquellen und damit reduzierter Gefahr von zeitlichem Versatz der Signale der einzelnen Kanäle geschaffen.

Insbesondere kann vorgesehen sein, dass die Verteilung der modulationsrelevanten Daten zwischen den Kanal-Wandlern nach dem Arbeitsprinzip eines Schieberegisters erfolgt, wobei die Ausgabe der modulationsrelevanten Daten an die zugehörigen Digital-zu-Analog-Konverter über eine jedem Kanal-Wandler zugeordnete gemeinsame Steuerleitung getriggert wird. Durch die Seriell/Parallel-Wandlung in Form eines Schieberegisters wird die Aufteilung der Daten unter den Kanal-Wandlern vereinfacht. Die Daten werden nun von der Ansteuerlogik seriell über eine gemeinsame Datenleitung an das erste Schieberegister (des ersten Kanal-Wandlers) mit einer Anzahl von beispielsweise m Speicherplätzen übergeben. Sobald die Anzahl von m Bits um ein Bit überschritten wurde, wird das erste weitere Bit über den seriellen Ausgang an den seriellen Eingang des nächsten Schieberegisters (des nächsten Kanal-Wandlers) weitergegeben und dort als 1. Bit gespeichert. Dieser Schritt kann entsprechend der Anzahl der in Serie geschalteten Schieberegister (bzw. Kanal-Wandler) so oft wiederholt werden, bis der Speicher aller Register beschrieben wurde. Um nun Kanten im Lichtbild vermeiden zu können, werden die Analogwerte exakt zeitgleich parallel an die nachgeordneten Digital-Analog-Konverter ausgegeben. Das bedeutet, dass alle n Schieberegister zum gleichen Zeitpunkt m parallele Bits ausgeben. Sobald alle Datenpakete auf der seriellen Leitung versendet wurden und alle Bits in allen Registern entsprechend des gewünschten Ausgangszustands gesetzt wurden, erfolgt mit Hilfe eines SET-Signals (über die Steuerverbindung) die gleichzeitige Ausgabe aller parallelen Ausgänge. Wenn alle mit der Anzahl n versendeten Datenpakete denselben Inhalt haben, muss die Analogspannung am Ausgang jedes der n Digital-Analog-Konverter, die als R2R-Netzwerke ausgeführt sein können, den gleichen Wert besitzen. Wenn nun alle Schieberegister auch gleichzeitig die entsprechenden Bits setzen, muss an jedem der n R2R-Netzwerke zum gleichen Zeitpunkt der gleiche Ausgangsspannungswert auftreten. Die gleichzeitige Ausgabe der analogen Spannungen an den Modulationsstufen, stellt nun die Ströme in den entsprechenden LichtKanälen so ein, dass das Lichtbild nicht versetzt wirkt.

Außerdem kann erreicht werden, dass eine Ansteuerung für die Lichtquelle eines Scheinwerfers geschaffen wird, welche erlaubt, dass die Digital-zu-Analog-Konverter mit der Lichtquelle, beispielsweise in Form einer Laserdiode, von der Logikschaltung entfernt positioniert werden kann, wobei zusätzlich sichergestellt werden kann, dass die Leitungen des jeweiligen ersten Busses so ausgeführt werden können, sodass sie sehr kurz und vorzugsweise gleich lang sind und somit eine verbesserte Ansteuerung des Leuchtkanals erfolgen kann, ohne dass unerwünschte optische Effekte bei der Konversion der parallelen Signale in ein analoges Ansteuerungssignal über eine Treiberleitung entstehen.

Die Verwendung eines Datenbusses für den ersten oder zweiten Bus zur Verteilung der Steuerdaten eines Leuchtkanals an den Ort auf einer Leiterplatte, an welchem die Lichtquelle angeordnet ist, erlaubt eine lokale Konversion der digitalen Steuerdaten in ein analoges Treibersignal. Somit wird es beim Entwurf der Leitungsführungen auf dem Schaltungsträger, wie eine Leiterplatte, erheblich einfacher, die Leitungslängen aufeinander präzise abzustimmen.

Der erste Bus und/oder der zweite Bus kann grundsätzlich als paralleler Bus oder serieller Bus ausgeführt sein. Ein paralleler Bus ist beispielsweise hinsichtlich der Übertragungsgeschwindigkeit günstig, was jedoch häufig eine erhöhte Komplexität der Schaltungsanordnung auf einer Leiterplatte erfordert. Ein serieller Bus kann oft einfacher und platzsparender auf einer Leiterplatte umgesetzt werden, erfordert jedoch eine entsprechend hohe Übertragungsgeschwindigkeit.

Es ist der Fachperson klar, dass der Kanal-Wandler auch dazu eingerichtet sein kann, neben den modulationsrelevanten Daten auch eine Kanal-Information aus den von der Logikschaltung empfangenen Daten zu ermitteln, um festzustellen, für welchen der Lichtkanäle die jeweiligen modulationsrelevanten Daten bestimmt sind. Die Kanal-Information kann von der Logikschaltung bereitgestellt werden. Diese Ausführungsvariante ist besonders bei Verwendung eines parallelen Busses für den zweiten Bus geeignet.

Alternativ kann die Kanal-Information auch durch die Logikschaltung übermittelt werden, indem die zeitliche Abfolge von modulationsrelevanten Daten einer Zuordnung von modulationsrelevanten Daten zu einem jeweiligen Lichtkanal beschreibt. Die zeitliche Abfolge wird dabei durch das Taktsignal bestimmt. Diese Ausführungsvariante ist besonders bei Verwendung eines seriellen Busses für den zweiten Bus geeignet.

Es kann günstig sein, wenn der erste Bus ein paralleler Bus ist und eine Vielzahl an ersten Busleitungen umfasst, welche eine durchschnittliche erste Leitungslänge festlegen. Dadurch kann eine einfache weitere Verarbeitung der über den Bus übertragenen Daten durchgeführt werden und daher die entsprechende Schaltungsanordnung sehr einfach und mit geringer Komplexität ausgeführt werden.

Es ist vorteilhaft, wenn zumindest zwei Leuchtkanäle umfasst sind, deren Kanal-Wandler mittels dem zweiten Bus nacheinander in Serie geschaltet sind, und zumindest einen vorhergehenden Kanal-Wandler und zumindest einen nachfolgenden Kanal-Wandler beinhalten.

Der zumindest eine, jeweils vorhergehende Kanal-Wandler ist in der Abfolge am zweiten Bus vor dem zumindest einen nachfolgenden Kanal-Wandler angeordnet.

Der zumindest eine, jeweils vorhergehende Kanal-Wandler weist einen Datenausgang auf, welcher mit dem Dateneingang des zumindest einen nachfolgenden Kanal-Wandler mittels dem zweiten Bus verbunden ist.

Der zumindest eine, jeweils vorhergehenden Kanal-Wandler ist dazu eingerichtet, mit Hilfe des Taktsignals vom Dateneingang modulationsrelevanten Daten zu empfangen und über den Datenausgang wieder auszugeben.

Bei Verwendung von zwei, drei, vier, fünf oder mehr Lichtkanälen ist es besonders günstig, wenn durch die Ansteuerung der Lichtquellen auf die genannte einfache Weise das Signallaufzeitverhalten bei der Ansteuerung der Lichtquellen der einzelnen Leuchtkanäle verbessert wird.

Der erste Bus weist eine durchschnittliche erste Leitungslänge auf.

Die zumindest zwei Leuchtkanäle, deren Kanal-Wandler mittels dem zweiten Bus nacheinander in Serie geschaltet sind, weisen einen ersten Kanal-Wandler auf, wobei der erste Kanal-Wandler in der Abfolge am zweiten Bus als Erstes angeordnet ist.

Der zweite Bus weist eine durchschnittliche zweite Leitungslänge zwischen dem Anschluss der Daten-Schnittstelle bzw. des Daten-Ausgangs der Logikschaltung und dem Anschluss des Eingangs des ersten Kanal-Wandler auf.

Es kann günstig seinkann günstig sein, wenn die zweite Leitungslänge ein Mehrfaches der ersten Leitungslänge beträgt. Dadurch kann die Fläche auf der Leiterplatte besonders effizient genützt werden. Unter dem Ausdruck "Mehrfach" wird im Rahmen dieses Dokuments "zumindest dreifach" verstanden.

Durch eine entsprechend der vorhergehenden Beschreibung getroffene Wahl der Leitungslängen wird erreicht, dass bei der Ansteuerung der Lichtquelle auf einfache Weise das Signallaufzeitverhalten bei der Ansteuerung der Lichtquellen der einzelnen Leuchtkanäle verbessert wird.

Eine durchschnittliche Leitungslänge kann über alle am selben Bus liegenden Leitungen gebildet werden, beispielsweise durch die Bildung eines arithmetischen Mittels oder durch Bildung eines Werts der durchschnittlichen Leitungslänge anhand eines durchschnittlichen geometrischen Verlaufs der Leitungsführung des Busses auf einer Leiterplatte. Im Fall eines seriellen Busses kann die durchschnittliche Leitungslänge der tatsächlichen Leitungslänge des Leitungspaars, nämlich einer Signalleitung und einer Bezugsleitung, eines seriellen Busses entsprechen, oder beispielsweise der Länge der Signalleitung entsprechen.

Die zumindest zwei Leuchtkanäle, deren Kanal-Wandler mittels dem zweiten Bus nacheinander in Serie geschaltet sind, weisen einen letzten Kanal-Wandler auf, wobei der letzte Kanal-Wandler in der Abfolge am zweiten Bus als Letztes angeordnet ist.

Der zweite Bus weist eine durchschnittliche dritte Leitungslänge zwischen dem Anschluss der Daten-Schnittstelle bzw. des Daten-Ausgangs der Logikschaltung und dem Anschluss des Eingangs des letzten Kanal-Wandlers auf.

Es kann günstig seinkann günstig sein, wenn die dritte Leitungslänge ein Mehrfaches der ersten Leitungslänge beträgt. Dadurch kann die Fläche auf der Leiterplatte besonders effizient genützt werden.

Durch die genannte Wahl der Leitungslängen wird erreicht, dass bei der Ansteuerung der Lichtquelle auf einfache Weise das Signallaufzeitverhalten bei der Ansteuerung der Lichtquellen der einzelnen Leuchtkanäle weiter verbessert wird.

In diesem Zusammenhang ist mit dem ersten bzw. letzten Kanal-Wandler der Kanal-Wandler gemeint, welcher bei einer Reihenschaltung von zumindest zwei Kanal-Wandlern in der Reihenfolge als erster bzw. letzter angeordnet ist. Die Reihenschaltung der zumindest zwei Kanal-Wandler erfolgt über den zweiten Bus. Der erste der zumindest zwei Kanal-Wandler ist jener, welcher direkt mit dem Daten-Schnittstelle bzw. Ausgang der Logikschaltung verbunden ist.

Der zweite Bus weist eine durchschnittliche vierte Leitungslänge zwischen dem Anschluss des Eingangs des ersten Kanal-Wandlers und dem Anschluss des Eingangs des letzten Kanal-Wandlers auf.

Es kann günstig sein, wenn die vierte Leitungslänge ein Mehrfaches der ersten Leitungslänge beträgt. Dadurch kann die Fläche auf der Leiterplatte besonders effizient genützt werden.

Es ist auch günstig, wenn eine Wandler-Baugruppe eines ersten Leuchtkanals, welche einen Kanal-Wandler und/oder einen Digital-zu-Analog-Konverter bildet, geometrisch von einer benachbarten Wandler-Baugruppe eines zweiten Leuchtkanals beabstandet angeordnet ist.

Dadurch kann der Platz zur Anordnung der elektronischen Bauteile bzw. der Leiterbahnen auf der Leiterplatte optimal ausgenutzt werden, bzw. die Leiterplatte kleiner ausgeführt werden.

Es ist besonders günstig, wenn die Lichtquelle des zumindest einen Leuchtkanals zumindest eine Halbleiter-Lichtquelle, insbesondere eine Laserdiode oder Leuchtdiode, umfasst.

Es ist vorteilhaft, wenn der zweite Bus ein serieller Bus ist, da die Komplexität der Schaltung dadurch weiter reduziert werden kann.

Es ist außerdem vorteilhaft, wenn der Kanal-Wandler des zumindest einen Leuchtkanals ein Seriell-zu-Parallel-Wandler ist, da die Komplexität der Schaltung dadurch weiter reduziert werden kann.

Es kann günstig sein, wenn der Kanal-Wandler des zumindest einen Leuchtkanals durch ein digitales Schieberegister gebildet ist. Dadurch kann der Kanal-Wandler besonders einfach und kostengünstig realisiert werden.

Ferner ist es besonders günstig, wenn der Digital-zu-Analog-Konverter des zumindest einen Leuchtkanals durch ein R/2R-Netzwerk gebildet ist. Dadurch kann der Digital-zu-Analog-Konverter besonders kostengünstig und variabel in der Positionierung der notwendigen Widerstands-Bauteile auf einer Leiterplatte realisiert werden.

Es ist vorteilhaft, wenn ein Lichtkonverter im Strahlengang des Lichtbündels zwischen der Ablenkvorrichtung und der Projektionsoptik in der Zwischenbildebene, welche in der Brennebene der Projektionsoptik gelegen ist, angeordnet ist. Der Lichtkonverter ist dazu eingerichtet, mittels einem einfallenden Lichtbündel eine Emission eines zusätzlichen Lichtbündels in Richtung der Projektionsoptik anzuregen. Dadurch kann eine einfache Anordnung mit einer Laserlichtquelle geschaffen werden.

Es können weitere optische Elemente im Strahlengang des Lichtbündels in der Anordnung vorgesehen sein, um etwa das Lichtbündel zu formen oder zu leiten, beispielsweise Reflektoren, Linsen, Blenden oder ähnliches.

Es ist klar, dass ein Scheinwerfer noch viele andere, nicht genannte Teile (elektrische, optische oder mechanische Systemteile) enthält, die einen sinnvollen Einsatz der Erfindung in einem Kraftfahrzeug, wie beispielweise in einem PKW oder Motorrad, ermöglichen.

Für die Erfindung in einem Scheinwerfer wichtige Teile sind in der vorhergehenden Beschreibung erläutert, wobei klar ist, dass ein Scheinwerfer noch viele andere, nicht beschriebene Teile enthält, die einen sinnvollen Einsatz in einem Kraftfahrzeug, wie insbesondere einem PKW oder Motorrad, ermöglichen. Der Übersichtlichkeit halber wird daher beispielsweise auf Kühlvorrichtungen für Bauteile, weitere Ansteuerungselektronik, weitere optische Elemente, mechanische Verstelleinrichtungen beziehungsweise Halterungen oder Gehäuse nicht näher eingegangen.

Es ist auch klar, dass die vorher genannten Merkmale untereinander kombiniert werden können.

Die Erfindung und weitere Vorteile werden im Folgenden anhand von nicht einschränkenden Ausführungsbeispielen näher beschrieben, die in den beiliegenden Zeichnungen veranschaulicht sind. Die Zeichnungen zeigen in
- Fig. 1: einen Fahrzeugscheinwerfer nach dem Stand der Technik mit drei Lichtquellen und einem um eine Achse verschwenkbaren Ablenkelement,
- Fig. 2: ein Konversionsmittel eines Fahrzeugscheinwerfers nach der Fig. 1,
- Fig. 3: eine schematische Darstellung der Datenübertragung für die Ansteuerung von Lichtzeilen in einem Scheinwerfer nach dem Stand der Technik,
- Fig. 4: ein elektrisches Blockschaltbild eines Scheinwerfers nach dem Stand der Technik,
- Fig. 5: ein elektrisches Blockschaltbild eines Ausführungsbeispiels eines erfindungsgemäßen Scheinwerfers,
- Fig. 6: einen Schaltplan für einen Digital-zu-Analog-Konverter mittels einem R/2R-Netzwerk und einer Treiberschaltung für eine Lichtquelle nach dem Stand der Technik,
- Fig. 7: eine schematische Darstellung einer elektronischen Schaltung auf einer Leiterplatte für den Scheinwerfer gemäß Fig. 4,
- Fig. 8: eine schematische Darstellung einer elektronischen Schaltung auf einer Leiterplatte für den Scheinwerfer gemäß Fig. 5.

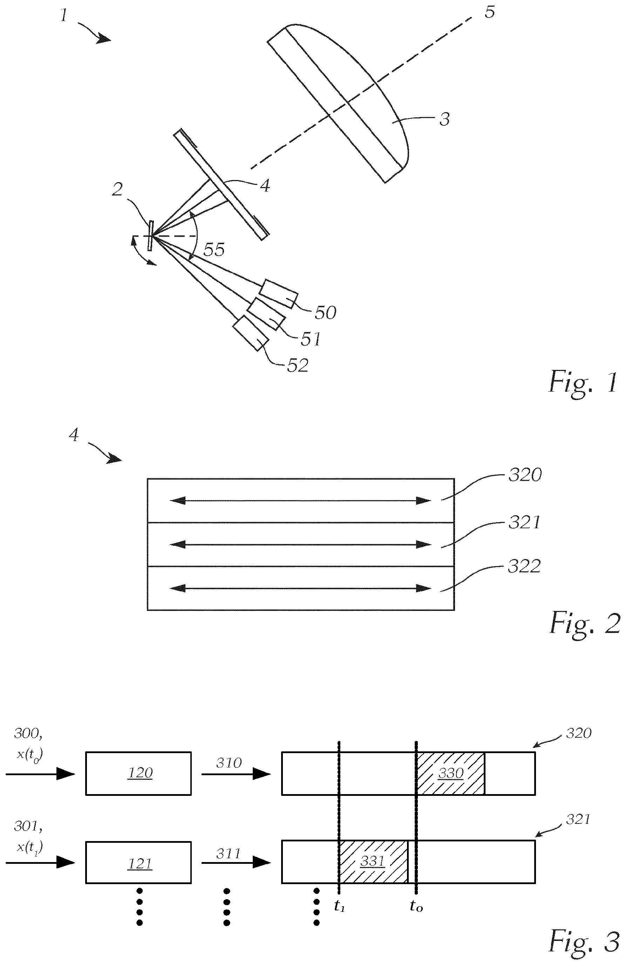

Unter Bezugnahme auf **Fig. 1** bis **Fig. 8** werden nun Ausführungsbeispiele der Erfindung näher erläutert.

Zur besseren Übersichtlichkeit sind nicht alle Schaltungsteile gezeigt, welche für den Betrieb eines Kraftfahrzeugscheinwerfers notwendig sind.

Im Weiteren wird auf "Leitungslängen" Bezug genommen, welche jeweils als die geometrische Länge einer Leitung zur Führung elektrischer Signale, beispielsweise auf einer Leiterplatte, definiert ist. Lange Leitungen können zu unerwünschten Verzögerungen in der Laufzeit von elektrischen Signalen führen. Zusätzlich kann der Verzögerungseffekt frequenzabhängig sein, wodurch eine unerwünschte "Verschmierung" (Signal-Dispersion) hervorgerufen werden kann und die Flanken bei einem Signalwechsel abgeflacht werden können. Eine entsprechende Wahl der Art oder Gestalt der Leitung kann diese unerwünschten Effekte verringern.

In den Figuren sind Leitungen mit Leitungslängen nur schematisch eingezeichnet, das heißt, dass die gezeigten Leitungslängen nicht realen Längen beispielsweise auf einer Leiterplatte entsprechen, sondern nur veranschaulichen sollen, zwischen welchen Punkten einer elektronischen Schaltung die jeweiligen Längen bestimmbar sind.

**Fig. 1** zeigt ein Ausführungsbeispiel eines Kraftfahrzeugscheinwerfers **1,** umfassend eine elektronische Schaltung, welche eine Logikschaltung und drei Leuchtkanäle mit jeweils einer Lichtquelle **50-52** aufweist.
Der Kraftfahrzeugscheinwerfer 1 weist ferner eine Ablenkvorrichtung **2,** eine Ansteuerschaltung zur Ansteuerung der Ablenkvorrichtung 2 und eine Projektionsoptik **3** auf. Die Ansteuerschaltung steuert die Ablenkung der Ablenkvorrichtung 2 mittels eines Ablenk-Parametersatzes.
Die Lichtquelle 50-52 des jeweiligen Leuchtkanals ist von der Logikschaltung zur Modulation der Leistung der Lichtquelle 50-52 ansteuerbar und dazu eingerichtet, ein Lichtbündel in Richtung der Ablenkvorrichtung 2 zu emittieren. Die Logikschaltung steuert die Modulation der Leistung der Lichtquellen 50-52 mittels jeweiliger Helligkeitsdatensätze.

Die Ablenkvorrichtung 2 ist dazu eingerichtet, das emittierte Lichtbündel umzulenken und in einer Zwischenbildebene eine Helligkeitsverteilung auszubilden, wobei die Zwischenbildebene in der Brennebene der Projektionsoptik 3 gelegen ist, und die Projektionsoptik 3 die Helligkeitsverteilung in der Zwischenbildebene als Lichtbild in Abstrahlrichtung **5** des Kraftfahrzeugscheinwerfers 1 projiziert.

Die Projektionsoptik 3 kann beispielsweise durch eine oder mehrere Sammellinsen ausgeführt sein.

In einer Einbaulage in einem Kraftfahrzeug kann der Kraftfahrzeugscheinwerfer 1 somit ein Lichtbild in Abstrahlrichtung 5 in den Verkehrsraum vor dem Fahrzeug projizieren.

Die Ablenkvorrichtung 2 ist beispielsweise als Mikroablenkeinheit mit einem steuerbaren Mikrospiegel ausgeführt, welcher dazu eingerichtet ist, die Laserstrahlen der Lichtquellen 50-52 in einem definierten Betriebszustand unter einem Ablenkwinkel **55** abzulenken.

Optional kann zusätzlich ein Konversionselement **4** im Strahlengang zwischen der Ablenkvorrichtung 2 und der Projektionsoptik 3 angeordnet sein, um beispielsweise eine Konversion von blauem Laserlicht (z.B. mit ungefähr 450 nm Wellenlänge), welches von den Lichtquellen 50-52 in Form eines Halbleiterlasers erzeugt ist, in weißes Licht zu erreichen.

Alternativ können die Lichtquellen 50-52 weißes Licht erzeugen und in diesem Fall kann auf ein Konversionselement 4 verzichtet werden. Es kann notwendig sein, dass das weiße Licht der Lichtquellen 50-52 im Strahlengang vor der Ablenkvorrichtung 2 durch eine Sammeloptik zusätzlich gebündelt werden muss, was in der Figur nicht dargestellt ist.

Auf die elektronische Schaltung wird im Weiteren näher eingegangen.

In der **Fig. 2** zeigt schematisch das Konversionselement 4 mit einer Konversionsfläche, auf welcher die Laserstrahlen sehr schnell in horizontaler Richtung abgelenkt werden, wie durch Pfeile angedeutet, und ein Leuchtbild auf die Konversionsfläche schreiben. Die Konversionsfläche liegt in einer Zwischenbildebene. Diese Zwischenbildebene liegt in der Brennebene der Projektionsoptik 3, und das Leuchtbild auf der Konversionsfläche wird durch die Projektionsoptik 3 in Richtung der Abstrahlrichtung 5 als Leuchtbild auf die Straße projiziert. Die Abstrahlrichtung 5 kann beispielsweise durch eine Nulllage definiert sein, in der der Ablenkspiegel nicht verstellt ist.

Das Konversionselement 4 konvertiert beispielsweise von der Laser-Diode 50-52 emittiertes Laser-Licht, insbesondere im Bereich von ungefähr 450nm Wellenlänge, in weißes Licht, welches vom Fahrzeugscheinwerfer 1 in weiterer Folge in Richtung der Abstrahlrichtung 5 abgestrahlt wird.

**Fig. 3** zeigt den zeitlichen Signalverlauf bei der Ansteuerung der Lichtquellen, welche als Lichtzeilen in einer Lichtverteilung erscheinen, in Verbindung mit Umlenkvorrichtungen nach dem Stand der Technik, beispielsweise in Form von "Mikrospiegeln" in MEMS-Technologie.

Ein Helligkeitsdatensatz **300, 301** wird durch einen Digital-zu-Analog-Konverter **120-122** in ein analoges Treibersignal **310, 311** gewandelt, welches die Lichtquelle 50-52 ansteuert. Dabei kann es durch unterschiedliche Leitungslängen zwischen einzelnen Lichtzeilen **320, 321** zu unterschiedlichen Laufzeitverzögerungen der analogen Treibersignale 310, 311 kommen, was sich durch unerwünschte Effekte im vom Scheinwerfer projizierten Lichtbild bemerkbar machen kann. Es können Linien oder Kanten im Lichtbild auftreten, welche den Gesamteindruck des Lichtbildes unerwünscht stören.

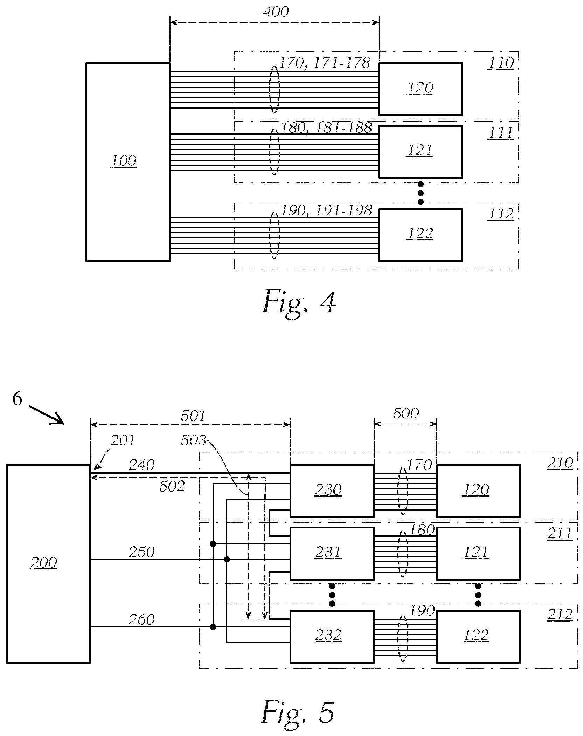

In der **Fig. 4** ist ein Blockschaltbild einer elektronischen Schaltung nach dem Stand der Technik gezeigt, bei welcher Leuchtkanäle **110-112** von einer Logikschaltung **100** ansteuerbar sind.

Die Logikschaltung 100 dient zur Ansteuerung von Digital-zu-Analog-Konvertern **120-122** der Leuchtkanäle 110-112.

Jeder Leuchtkanal 110-112 kann von der Logikschaltung 100 über einen parallelen, ersten Bus **170, 180, 190** angesteuert werden, welcher in diesem Beispiel jeweils acht parallele Busleitungen **171-178, 181-188** und **191-198** aufweist.

**Fig. 5** zeigt ein Blockschaltbild eines Ausführungsbeispiels einer elektronischen Schaltung **6** des erfindungsgemäßen Fahrzeugscheinwerfers 1.

Die elektronischen Schaltung **6** umfasst elektronische Bauteile und Leiterbahnen zur Signalführung, welche auf einer Leiterplatte angeordnet sind, was im Weiteren dargestellt ist.

Die elektronische Schaltung 6 des Fahrzeugscheinwerfers 1 umfasst drei Leuchtkanäle **210-212,** eine Logikschaltung **200** mit einer Daten-Schnittstelle bzw. einem Datenausgang **201** sowie eine Ablenkvorrichtung 2.

Eine erfindungsgemäße Anordnung kann einen, zwei, drei, vier, fünf oder mehr Leuchtkanäle umfassen.

Die Leuchtkanäle 210-212 mit jeweils einer Lichtquelle 50-52 sind von der Logikschaltung 200 ansteuerbar und dazu eingerichtet, ein Lichtbündel zu emittieren.

Die drei Leuchtkanäle 210-212 umfassen jeweils einen Kanal-Wandler **230-232,** einen Digital-zu-Analog-Konverter 120-122 und eine Lichtquelle 50-52.

Die Kanal-Wandler 230- 232 sind in diesem Beispiel jeweils ein Schieberegister, wobei aber auch andere Logik-Schaltungen dafür geeignet sein können, wie beispielsweise Datenbusse nach dem RS-232 oder USB-Standard. Es ist dabei klar, dass bei der Verkettung mehrerer Leitungen zu einem Datenbus, insbesondere seriellen Bus, jeweils eine Schaltungslogik erforderlich sein kann, welche dazu eingerichtet ist, serielle Signale über einen seriellen Eingang zu empfangen, ggf. zu speichern und über einen seriellen Ausgang wieder zu senden und dadurch einen verketteten seriellen Bus zu schaffen. Der Fachperson ist klar, dass eine entsprechende Architektur für einen parallelen Bus geschaffen werden kann, wobei bei der Umsetzung eines parallelen Busses die eingangs genannten Nachteile entsprechend berücksichtigt werden müssen.

Alternativ kann auch eine Daisy-Chain-Architektur für den zweiten Bus eingesetzt werden, in welcher ein serieller Eingang dem seriellen Ausgang einer an die Architektur angeschlossenen Baugruppe entspricht. Dabei kann es erforderlich sein, dass beispielsweise eine Logikschaltung die Zuordnung der empfangenen seriellen Daten zu den jeweiligen Leuchtkanälen durchführt. Diese Variante ist nicht dargestellt.

Grundsätzlich kann es für eine Anwendung auch sinnvoll sein, wenn für den zweiten Bus beispielsweise ein paralleler Bus eingesetzt wird. Dies kann insbesondere für höhere Übertragungsgeschwindigkeiten sinnvoll sein, sodass ein ggf. höherer Aufwand für einen parallelen Bus auf einer Leiterplatte in Kauf genommen wird. Diese Variante ist nicht dargestellt.

Die Logikschaltung 200 ist dazu eingerichtet, zumindest einen Helligkeitsdatensatz **300, 301** zur Ansteuerung der Lichtquelle 50-52 über einen zweiten Bus **240** seriell an die beispielsweise drei Leuchtkanäle 210-212 zu übertragen und mit einem Taktsignal über eine Taktleitung **250** und einem Steuersignal über eine Steuerleitung **260** anzusteuern.

Ein jeweiliger Kanal-Wandler 230-232 ist dazu eingerichtet, den zumindest einen Helligkeitsdatensatz 300, 301 von dem zweiten Bus 240 seriell mit Hilfe des Taktsignals von der Taktleitung 250 zu empfangen und den zumindest einen Helligkeitsdatensatz 300, 301 parallel über einen, jedem Kanal-Wandler 230-232 zugeordneten ersten Bus 170, 180, 190 parallel zu übertragen, wenn das Steuersignal über die Steuerleitung von der Logikschaltung 200 empfangen wird.

Ein jeweiliger Digital-zu-Analog-Konverter 120-122 ist dazu eingerichtet, den zumindest einen Helligkeitsdatensatz 300, 301 von dem ersten Bus 170, 180, 190 parallel zu empfangen und in jeweils ein analoges Treibersignal **310-312** für die drei Lichtquellen 50-52 zu konvertieren.

Die Lichtquellen 50-52 sind jeweils eingerichtet, mit dem analogen Treibersignal 310-312 über eine Treiberleitung **45** angesteuert zu werden und die Helligkeit der Lichtquelle 50-52 wird entsprechend dem analogen Treibersignal 310-312 gesteuert.

Ferner ist die Lichtquelle 50-52 eingerichtet, Licht in Richtung der Ablenkvorrichtung 2 zu emittieren, von wo es abgelenkt wird und in einem eingebauten Zustand in einem Fahrzeug auf die Fahrbahn vor das Fahrzeug ein Lichtbild projiziert.

Im Detail kann die Anordnung auch wie folgt beschrieben werden:
Jeder der drei Leuchtkanäle 210-212 weist einen Kanal-Wandler 230-232, einen Digital-zu-Analog-Konverter 120-122 und eine Lichtquelle 50-52 auf, wobei
- der jeweilige Kanal-Wandler 230-232 einen Dateneingang **241-243,** einen Takteingang **251-253** und einen Steuereingang **261-263** aufweist, und dazu eingerichtet ist, über den Takteingang 251-253 ein Taktsignal zu empfangen, und über den Steuereingang 261-263 ein Steuersignal zu empfangen, und mit Hilfe des Taktsignals vom Dateneingang 241-243 modulationsrelevante Daten zu empfangen, und
- der jeweilige Kanal-Wandler 230-232 über einen ersten Bus **170, 180, 190** mit dem jeweiligen Digital-zu-Analog-Konverter 120-122 verbunden ist und dazu eingerichtet ist, die modulationsrelevanten Daten mit Hilfe des Steuersignals über den ersten Bus 170, 180, 190 zu senden, und
- der jeweilige Digital-zu-Analog-Konverter 120-122 über eine Treiberleitung **45** mit der Lichtquelle 50-52 verbunden ist und dazu eingerichtet ist, die modulationsrelevanten Daten von dem ersten Bus 170, 180, 190 zu empfangen, in ein analoges Treibersignal **310** zu konvertieren und über die Treiberleitung 45 auszugeben, und
- die jeweilige Lichtquelle 50-52 dazu eingerichtet ist, mittels dem von der Treiberleitung 45 empfangenen analogen Treibersignal 310 angesteuert zu werden und Licht in Form des Lichtbündels zu emittieren,
und die Logikschaltung 200 dazu eingerichtet ist,
- das Taktsignal zu erzeugen und über die Taktleitung 250, welche mit dem Takteingang 251-253 verbunden ist, auszugeben, und
- das Steuersignal zu erzeugen und über die Steuerleitung 260, welche mit dem Steuereingang 261-263 verbunden ist, auszugeben, und
- zumindest einen Helligkeitsdatensatz 300, 301 zur Ansteuerung der Lichtquelle 50 des zumindest einen Leuchtkanals 210-212 in Form von modulationsrelevante Daten zu erzeugen und über den zweiten Bus 240, welcher mit dem Dateneingang 241-243 des Kanal-Wandler 230-232 verbunden ist, mit Hilfe des Taktsignals und des Steuersignals zu übertragen.

Die drei Leuchtkanäle 210-212, deren jeweilige Kanal-Wandler 230-232 mittels dem zweiten Bus 240 nacheinander in Serie geschaltet sind, beinhalten jeweils einen vorhergehenden Kanal-Wandler 230, 231 und jeweils einen nachfolgenden Kanal-Wandler 231, 232.

Der jeweils vorhergehende Kanal-Wandler 230, 231 ist in der Abfolge am zweiten Bus 240 vor dem jeweils nachfolgenden Kanal-Wandler 231, 232 angeordnet.

Der jeweils vorhergehende Kanal-Wandler 230, 231 weist einen Datenausgang 244, 245 auf, welcher mit dem seriellen Dateneingang 242-243 des jeweils nachfolgenden Kanal-Wandlers 231, 232 mittels dem zweiten Bus 240 verbunden ist.

Der jeweils vorhergehende Kanal-Wandler 230-232 ist dazu eingerichtet, mit Hilfe des Taktsignals vom Dateneingang 242, 243 modulationsrelevante Daten zu empfangen und über den Datenausgang 244, 245 wieder auszugeben.

Es ist der Fachperson klar, wie eine serielle Verkettung von elektronischen Baugruppen erfolgt, beispielsweise analog zu einer Serienschaltung von ohmschen Widerständen. Dabei gibt es innerhalb einer solchen seriellen Anordnung von Baugruppen ein erstes Element, an welchem beispielsweise eine Spannung angelegt wird, und ein letztes Element, welches beispielsweise mit dem Massepotential bezüglich der angelegten Spannung verbunden ist.

Im Unterschied zu einer Daisy-Chain-Anordnung wird bei der Erfindung jeweils der serielle Eingang einer Baugruppe mit einem seriellen Ausgang derselben Baugruppe entsprechend, beispielsweise über ein Schieberegister, verbunden und der Eingang der jeweils nächsten Baugruppe mit dem Ausgang der jeweils vorhergehenden Baugruppe verbunden.

Der erste Bus 170, 180, 190 ist in diesem Ausführungsbeispiel ein paralleler Bus und umfasst eine Vielzahl an parallelen Busleitungen 171-178, 181-188, 191-198, welche insgesamt eine durchschnittliche erste Leitungslänge **500** aufweisen, das heißt über alle drei Busse 170, 180 und 190 beträgt der Mittelwert der Leitungslängen aller Busleitungen 171-178, 181-188, 191-198 die durchschnittliche erste Leitungslänge 500.

Die drei Leuchtkanäle 210-212, deren Kanal-Wandler 230-232 mittels dem zweiten Bus 240 nacheinander in Serie geschaltet sind, weisen einen ersten Kanal-Wandler 230 auf.

Der zweite Bus 240 ist in diesem Ausführungsbeispiel ein serieller Bus.

Der Kanal-Wandler 230-232 des zumindest einen Leuchtkanals 210-212 ist in diesem Ausführungsbeispiel jeweils ein Seriell-zu-Parallel-Wandler.

Der erste Seriell-zu-Parallel-Wandler bzw. Kanal-Wandler 230 ist in der Abfolge am seriellen Bus bzw. zweiten Bus 240 als Erstes angeordnet.

Die drei Leuchtkanäle 210-212, deren Seriell-zu-Parallel-Wandler 230-232 mittels dem seriellen Bus 240 nacheinander in Serie geschaltet sind, weisen einen letzten Seriell-zu-Parallel-Wandler 232 auf.

Der letzte Seriell-zu-Parallel-Wandler 232 ist in der Abfolge am seriellen Bus 240 als Letztes angeordnet.

Der serielle Bus 240 weist eine zweite Leitungslänge **501** zwischen dem Anschluss der Daten-Schnittstelle bzw. des seriellen Daten-Ausgangs 201 der Logikschaltung 200 und dem Anschluss des seriellen Eingangs 241 des ersten Seriell-zu-Parallel-Wandler 230 auf.

Die zweite Leitungslänge 501 beträgt ein Mehrfaches der ersten Leitungslänge 500.

Der serielle Bus 240 weist eine dritte Leitungslänge **502** zwischen dem Anschluss der Daten-Schnittstelle bzw. des seriellen Daten-Ausgangs 201 der Logikschaltung 200 und dem Anschluss des seriellen Eingangs 243 des letzten Seriell-zu-Parallel-Wandlers 232 auf.

Die dritte Leitungslänge 502 beträgt ein Mehrfaches der ersten Leitungslänge 500.

Der serielle Bus 240 weist eine vierte Leitungslänge **503** zwischen dem Anschluss des seriellen Eingangs 241 des ersten Seriell-zu-Parallel-Wandlers 230 und dem Anschluss des seriellen Eingangs 243 des letzten Seriell-zu-Parallel-Wandler 232 auf.

Die vierte Leitungslänge 503 beträgt ein Mehrfaches der ersten Leitungslänge 500.

Die genannten, vorteilhaften Dimensionen der zweiten Leitungslänge 501, der dritten Leitungslänge 502 sowie der vierten Leitungslänge 503 bezüglich der ersten Leitungslänge 500 sind untereinander kombinierbar, bzw. auf andere Bezugspunkte beispielsweise auf einer Leiterplatte beziehbar.

In diesem Beispiel sind die Leuchtkanäle 210-212 mit demselben seriellen Bus 240 verbunden.

Die elektronischen Bauteile, aus welchen ein einzelner Seriell-zu-Parallel-Wandler 230-232 gebildet ist, formen eine Wandler-Baugruppe eines jeweiligen Leuchtkanals 210-212.

Es kann günstig sein, wenn eine Wandler-Baugruppe eines ersten Leuchtkanals geometrisch von einer benachbarten Wandler-Baugruppe eines zweiten Leuchtkanals beabstandet angeordnet ist. Dieser Aspekt ist in den Figuren nicht dargestellt.

Die Entfernung kann ein Mehrfaches der ersten Leitungslänge 500 betragen. Dadurch kann der Platz zur Anordnung der elektronischen Bauteile bzw. der Leiterbahnen auf der Leiterplatte optimal ausgenutzt werden, bzw. die Leiterplatte kleiner ausgeführt werden.

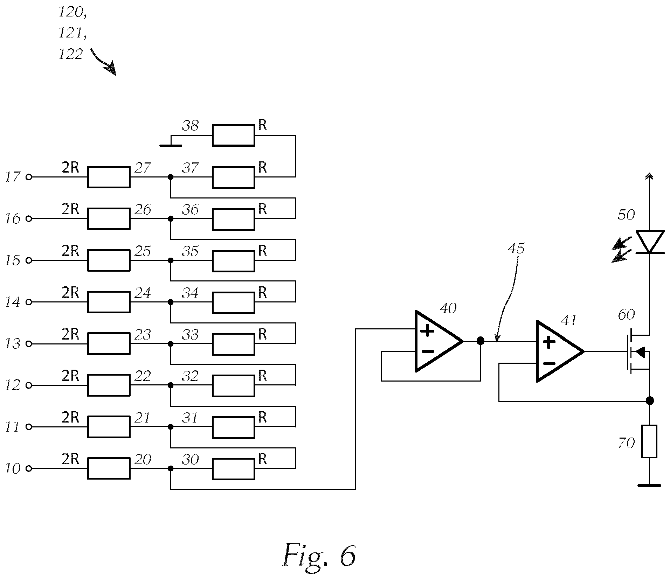

Die **Fig. 6** zeigt eine bevorzugte Ausführungsvariante eines Digital-zu-Analog-Konverters 120-122 mittels einem R/2R-Netzwerk, welches digitale Werte aus den empfangenen digitalen modulationsrelevanten Daten in eine Analogspannung umsetzt, welche zur Einstellung der Modulation der Leistung der Lichtquelle 51 dient und eine Lichtquelle 50 mittels einer Treiberschaltung, die aus zwei Operationsverstärkern **40, 41** und einem Leistungstransistor **60** gebildet ist, entsprechend ansteuert. Zur Einstellung des Stroms durch die Lichtquelle 51, hier in Form einer Laser-Diode, dient zusätzlich ein Serienwiderstand **70.**

Das R/2R-Widerstandsnetzwerk, gefolgt von einem oder mehreren Operationsverstärkern 40, 41 und dem Transistor 60, welcher als Modulator agiert, ist für die vorgesehene Anwendung in einem Fahrzeugscheinwerfer 1 einfacher und auch kostengünstiger als beispielsweise eine integrierte Schaltung.

Eine Treiberleitung 45 verbindet einen ersten Schaltungsteil, welcher den Digital-zu-Analog-Konverters 120-122 bildet, und einen zweiten Schaltungsteil, welcher den Treiber der Lichtquelle 50-52 bildet. In diesem Beispiel verbindet die Treiberleitung 45 die beiden Operationsverstärker 40, 41.

Die Operationsverstärker 40, 41 sind zur Entkopplung des ersten vom zweiten Schaltungsteil vorgesehen. Ansonsten müsste der höchstwertigste digitale Eingang 10, das heißt das höchste Bit des Helligkeitsdatensatzes 300, 301, bei gesetztem digitalem Eingangssignal, d.h. bei gesetztem Bit, einen hohen Anteil der Ausgangslast des R/2R-Widerstandsnetzwerks 120-122 übernehmen.

Das R/2R-Netzwerk ist aus Widerständen **20-27** und **30-38** mit den Werten R und 2R aufgebaut. Die einzelnen digitalen Eingänge **10-17** liegen entweder auf Masse oder auf der Referenzspannung. Jeder digitale Eingang trägt so seinen spezifischen Teil zur resultierenden Ausgangsspannung bei.

Zu den Vorteilen eines R/2R-Netzwerks zählen die sehr hohe Digital-zu-Analog-Konversions-Geschwindigkeit bei gleichzeitig sehr hoher Genauigkeit, sowie der einfache Aufbau durch gleichartige, kostengünstige Bauteile.

Allerdings muss bei einem R/2R-Netzwerks darauf geachtet werden, dass die Widerstände in ihrem Nennwert möglichst genau gleich sind, insbesondere die für die höherwertigen Bits.

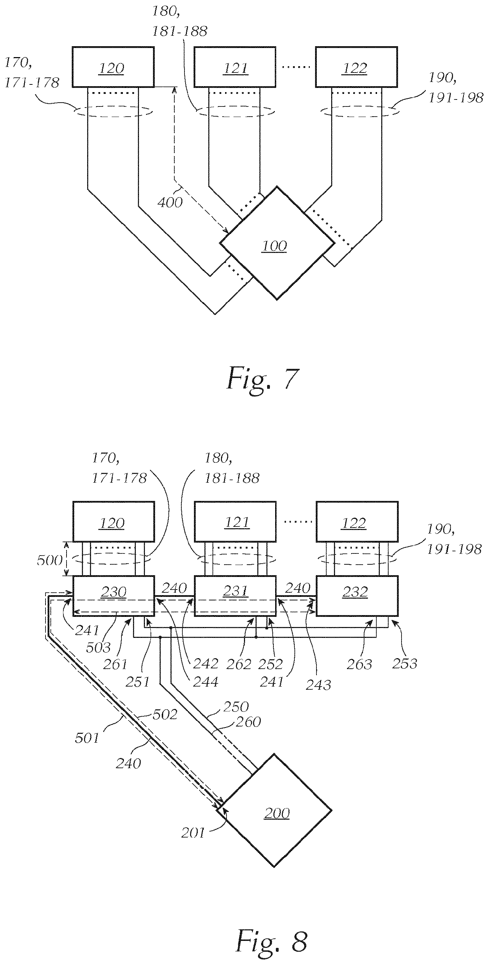

**Fig. 7** zeigt schematisch eine Anordnung des Scheinwerfers gemäß Fig. 4 mit einer elektronischen Schaltung auf einer Leiterplatte mit Bauteilen und Leiterbahnen nach dem Stand der Technik.

Es ist erkennbar, dass die Leitungen 171-178, 181-188 und 191-198 zwischen der Logikschaltung 100 und den Digital-zu-Analog-Konvertern 120-122 jeweils sehr lange und vor allem unterschiedliche Leitungslängen 400 aufweisen. Bei Anlegen elektrischer Spannungen durch die Logikschaltung 100 kann es somit zu unerwünschten Beeinträchtigungen der Qualität der übertragenen Signale kommen, insbesondere hinsichtlich der Signallaufzeiten.

**Fig. 8** zeigt schematisch eine Anordnung des Scheinwerfers 1 gemäß Fig. 5 mit einer elektronischen Schaltung 6 auf einer Leiterplatte mit Bauteilen und Leiterbahnen.

Es ist erkennbar, dass die Leitungen 171-178, 181-188 und 191-198 zwischen den Seriell-zu-Parallel-Wandlern 230-232 und den Digital-zu-Analog-Konvertern 120-122 deutlich kürzere und vor allem annähernd gleich lange Leitungslängen aufweisen.

Die Daten werden von der Logikschaltung 200, welche dazu eingerichtet ist, Helligkeitsdaten seriell auszugeben, und seriell über den zweiten Bus 240 mit Hilfe der Taktleitung 250 und der Steuerleitung 260 übertragen. Ferner gelten die Ausführungen hinsichtlich der Fig. 5.

Die Ausführungen der ersten Busse 170, 180 und 190, sowie der Leitungen 171-178, 181-188 und 191-198 aus der Fig. 7 und der Fig. 8 unterscheiden sich in der Form und Geometrie auf der jeweiligen Leiterplatte.

Es können jeweils zwischen den Digital-zu-Analog-Konvertern 121 und 122, sowie zwischen den Seriell-zu-Parallel-Wandlern 231 und 232 gemäß der Fig. 7 und 8 weitere Komponenten für eine größere Anzahl an Leuchtkanälen bzw. Lichtzeilen vorgesehen sein.

### Bezugszeichenliste:

- 1: Fahrzeugscheinwerfer
- 2: Ablenkvorrichtung
- 3: Projektionsoptik
- 4: Lichtkonverter
- 5: Abstrahlrichtung des Fahrzeugscheinwerfers
- 6: Elektronische Schaltung
- 10-17: digitaler Eingang
- 20-27, 30-38, 70: Widerstand
- 40,41: Operationsverstärker
- 45: Treiberleitung
- 50-52: Lichtquelle
- 55: Ablenkwinkel
- 60: Transistor
- 100, 200: Logikschaltung
- 201: Daten-Schnittstelle bzw. Daten-Ausgang der Logikschaltung
- 110-102, 210-212: Leuchtkanal
- 120-122: Digital-zu-Analog-Konverter, R/2R-Netzwerk
- 170, 180, 190: erster Bus
- 171-178, 181-188, 191-198: Busleitungen des ersten Busses
- 230-232: Kanal-Wandler
- 240: zweiter Bus, Datenbus
- 241-243: Dateneingang
- 244-245: Datenausgang
- 250: Taktleitung
- 251-253: Takteingang
- 260: Steuerleitung
- 261-263: Steuereingang
- 300, 301: Helligkeitsdatensatz
- 310, 311: analoges Treibersignal
- 320, 321, 322: Lichtzeile
- 330, 331: Leuchtstelle
- 400, 500, 502, 501, 503: Leitungslänge

## Patentansprüche

1. Kraftfahrzeugscheinwerfer (1), umfassend eine elektronische Schaltung (6), welche eine Logikschaltung (200) und zumindest zwei Leuchtkanäle (210-212) aufweist, wobei jedem Leuchtkanal (210-212) je eine Lichtquelle (50-52) zugeordnet ist,
und der Kraftfahrzeugscheinwerfer (1) ferner eine Ablenkvorrichtung (2), eine Ansteuerschaltung zur Ansteuerung der Ablenkvorrichtung (2) und eine Projektionsoptik (3) mit einer Brennebene aufweist,
und jede Lichtquelle (50-52) jedes Leuchtkanals (210-212) von der Logikschaltung (200) zur Modulation der Leistung der Lichtquelle (50-52) ansteuerbar ist und dazu eingerichtet ist, ein Lichtbündel in Richtung der Ablenkvorrichtung (2) zu emittieren,
und die Ablenkvorrichtung (2) dazu eingerichtet ist, das emittierte Lichtbündel umzulenken und in einer Zwischenbildebene eine Helligkeitsverteilung auszubilden, wobei die Zwischenbildebene in der Brennebene der Projektionsoptik (3) liegt, und die Projektionsoptik (3) die Helligkeitsverteilung der Zwischenbildebene als Lichtbild in Abstrahlrichtung (5) des Kraftfahrzeugscheinwerfers (1) projiziert,
**dadurch gekennzeichnet, dass**
jedem Leuchtkanal (210-212) ein Kanal-Wandler (230-232) und ein Digital-zu-Analog-Konverter (120-122) zugeordnet ist, wobei
- der Kanal-Wandler (230-232) einen Dateneingang (241-243), einen Takteingang (251-253) und einen Steuereingang (261-263) aufweist, und dazu eingerichtet ist, über den Takteingang (251-253) ein Taktsignal zu empfangen, und über den Steuereingang (261-263) ein Steuersignal zu empfangen, und mit Hilfe des Taktsignals über den Dateneingang (241-243) modulationsrelevante Daten zu empfangen, wobei das Datensignal, das Steuersignal und das Taktsignal von der Logikschaltung (200) erzeugt werden, und
- der Kanal-Wandler (230-232) über einen Bus (170, 180, 190) mit dem Digital-zu-Analog-Konverter (120-122) verbunden ist und dazu eingerichtet ist, die modulationsrelevanten Daten mit Hilfe des Steuersignals über den Bus (170, 180, 190) an den Digital-zu-Analog-Konverter (120-122) zu senden, und
- der Digital-zu-Analog-Konverter (120-122) über eine Treiberleitung (45) mit der Lichtquelle (50-52) verbunden ist und dazu eingerichtet ist, die modulationsrelevanten Daten von dem Bus (170, 180, 190) zu empfangen, in ein analoges Treibersignal (310) zu konvertieren und über die Treiberleitung (45) auszugeben, und
- die Lichtquelle (50-52) dazu eingerichtet ist, mittels dem von der Treiberleitung (45) empfangenen analogen Treibersignal (310) angesteuert zu werden und Licht in Form des Lichtbündels zu emittieren,
und die Logikschaltung (200) dazu eingerichtet ist,
- das Taktsignal zu erzeugen und über die Taktleitung (250), welche mit dem Takteingang (251-253) verbunden ist, auszugeben, und
- das Steuersignal zu erzeugen und über die Steuerleitung (260), welche mit dem Steuereingang (261-263) verbunden ist, auszugeben, und
- zumindest einen Helligkeitsdatensatz (300, 301) zur Ansteuerung der Lichtquellen (50) jedes Leuchtkanals (210-212) in Form von jedem Leuchtkanal (210-212) zugeordneten modulationsrelevanten Daten zu erzeugen, wobei die modulationsrelevanten Daten sämtlicher Kanal-Wandler (230-232) über eine einzige serielle Datenverbindung an einen der Kanal-Wandler (230-232) übertragen und ausgehend von diesem Kanal-Wandler (230-232) auf die verbleibenden Kanal-Wandler (230-232) aufgeteilt werden.

2. Kraftfahrzeugscheinwerfer (1) nach Anspruch 1, wobei die Verteilung der modulationsrelevanten Daten zwischen den Kanal-Wandlern (230-232) nach dem Arbeitsprinzip eines Schieberegisters erfolgt, wobei die Ausgabe der modulationsrelevanten Daten an die zugehörigen Digital-zu-Analog-Konverter (120-122) über eine jedem Kanal-Wandler (230-232) zugeordnete gemeinsame Steuerleitung (260) getriggert wird.

3. Kraftfahrzeugscheinwerfer (1) nach Anspruch 1 oder 2, umfassend zumindest zwei Leuchtkanäle (210-212), deren Kanal-Wandler (230-232) mittels einem zweiten Bus (240) nacheinander in Serie geschaltet sind, und zumindest einen vorhergehenden Kanal-Wandler (230, 231) und zumindest einen nachfolgenden Kanal-Wandler (231, 232) beinhalten, wobei der zumindest eine vorhergehende Kanal-Wandler (230, 231) in der Abfolge am zweiten Bus (240) vor dem zumindest einen nachfolgenden Kanal-Wandler (231, 232) angeordnet ist, und
der zumindest eine vorhergehende Kanal-Wandler (230, 231) einen Datenausgang (244, 245) aufweist, welcher mit dem seriellen Dateneingang (242-243) des zumindest einen nachfolgenden Kanal-Wandlers (231, 232) mittels dem zweiten Bus (240) verbunden ist, und der zumindest eine vorhergehende Kanal-Wandler (230-231) dazu eingerichtet ist, mit Hilfe des Taktsignals vom Dateneingang (242, 243) Lichtdaten zu empfangen und über den Datenausgang (244, 245) wieder auszugeben.

4. Kraftfahrzeugscheinwerfer (1) nach Anspruch 3, wobei der erste Bus (170, 180, 190) eine durchschnittliche erste Leitungslänge (500) aufweist, und
die zumindest zwei Leuchtkanäle (210-212), deren Kanal-Wandler (230-232) mittels dem zweiten Bus (240) nacheinander in Serie geschaltet sind, einen ersten Kanal-Wandler (230) aufweisen,
wobei der erste Kanal-Wandler (230) in der Abfolge am zweiten Bus (240) als Erstes angeordnet ist, und
der zweite Bus (240) eine zweite Leitungslänge (501) zwischen dem Anschluss der Daten-Schnittstelle (201) der Logikschaltung (200) und dem Anschluss des seriellen Eingangs (241) des ersten Kanal-Wandler (230) aufweist,
welche zweite Leitungslänge (501) ein Mehrfaches der ersten Leitungslänge (500) beträgt.

5. Kraftfahrzeugscheinwerfer (1) nach einem der Ansprüche 3 oder 4, wobei der jeweilige erste Bus (170, 180, 190) eine durchschnittliche erste Leitungslänge (500) aufweist,
und die zumindest zwei Leuchtkanäle (210-212), deren Kanal-Wandler (230-232) mittels dem zweiten Bus (240) nacheinander in Serie geschaltet sind, einen letzten Kanal-Wandler (232) aufweisen,
wobei der letzte Kanal-Wandler (232) in der Abfolge am zweiten Bus (240) als Letztes angeordnet ist, und
der zweite Bus (240) eine dritte Leitungslänge (502) zwischen dem Anschluss der Daten-Schnittstelle (201) der Logikschaltung (200) und dem Anschluss des seriellen Eingangs (243) des letzten Kanal-Wandlers (232) aufweist,
welche dritte Leitungslänge (502) ein Mehrfaches der ersten Leitungslänge (500) beträgt.

6. Kraftfahrzeugscheinwerfer (1) nach einem der Ansprüche 3 bis 5, wobei der erste Bus (170, 180, 190) eine durchschnittliche erste Leitungslänge (500) aufweist,
und die zumindest zwei Leuchtkanäle (210-212), deren Kanal-Wandler (230-232) mittels dem zweiten Bus (240) nacheinander in Serie geschaltet sind, einen ersten Kanal-Wandler (230) aufweisen,
wobei der erste Kanal-Wandler (230) in der Abfolge am zweiten Bus (240) als Erstes angeordnet ist, und
und die zumindest zwei Leuchtkanäle (210-212), deren Kanal-Wandler (230-232) mittels dem zweiten Bus (240) nacheinander in Serie geschaltet sind, einen letzten Kanal-Wandler (232) aufweisen,
wobei der letzte Kanal-Wandler (232) in der Abfolge am zweiten Bus (240) als Letztes angeordnet ist, und
der zweite Bus (240) eine vierte Leitungslänge (503) zwischen dem Anschluss des Eingangs (241) des ersten Kanal-Wandlers (230) und dem Anschluss des Eingangs (243) des letzten Kanal-Wandler (232) aufweist,
welche vierte Leitungslänge (503) ein Mehrfaches der ersten Leitungslänge (500) beträgt.

7. Fahrzeugscheinwerfer (1) nach einem der vorhergehenden Ansprüche, **dadurch gekennzeichnet, dass** die Lichtquelle (50-52) des zumindest einen Leuchtkanals (210-212) zumindest eine Halbleiter-Lichtquelle, insbesondere eine Laserdiode oder Leuchtdiode, umfasst.

8. Fahrzeugscheinwerfer (1) nach einem der vorhergehenden Ansprüche, **dadurch gekennzeichnet, dass** der zweite Bus (240) ein serieller Bus ist.

9. Fahrzeugscheinwerfer (1) nach einem der vorhergehenden Ansprüche, **dadurch gekennzeichnet, dass** der erste Bus (170, 180, 190) ein paralleler Bus ist und eine Vielzahl an zweiten Busleitungen (171-178, 181-188, 191-198) umfasst, welche eine durchschnittliche erste Leitungslänge (500) festlegen.

10. Fahrzeugscheinwerfer (1) nach Anspruch 8, **dadurch gekennzeichnet, dass** der Kanal-Wandler (230-232) des zumindest einen Leuchtkanals (210-212) ein Seriell-zu-Parallel-Wandler ist.

11. Fahrzeugscheinwerfer (1) nach einem der vorhergehenden Ansprüche, **dadurch gekennzeichnet, dass** der Kanal-Wandler (230-232) des zumindest einen Leuchtkanals (210-212) durch ein digitales Schieberegister gebildet ist.

12. Fahrzeugscheinwerfer (1) nach einem der vorhergehenden Ansprüche, **dadurch gekennzeichnet, dass** der Digital-zu-Analog-Konverter (120-122) des zumindest einen Leuchtkanals (210-212) durch ein R/2R-Netzwerk gebildet ist.

13. Fahrzeugscheinwerfer (1) nach einem der vorhergehenden Ansprüche, **dadurch gekennzeichnet, dass** ein Lichtkonverter (4) im Strahlengang des Lichtbündels zwischen der Ablenkvorrichtung (2) und der Projektionsoptik (3) in der Zwischenbildebene, welche in der Brennebene der Projektionsoptik (3) gelegen ist, angeordnet ist und welcher dazu eingerichtet ist, mittels einem einfallenden Lichtbündel eine Emission eines zusätzlichen Lichtbündels in Richtung der Projektionsoptik (3) anzuregen.
